(19) Europäisches Patentamt European Patent Office Office européen des brevets

(11) **EP 3 493 026 A1**

(12) **EUROPEAN PATENT APPLICATION**

(43) Date of publication:
**05.06.2019 Bulletin 2019/23**

(51) Int Cl.:
***G06F 3/01*** (2006.01)

(21) Application number: **17306653.1**

(22) Date of filing: **29.11.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **THOMSON LICENSING**
**92130 Issy les Moulineaux (FR)**

(72) Inventors:
• **QUERRE, Goulven**
**35576 Cesson-Sévigné (FR)**
• **LEROY, Bertrand**
**35576 Cesson-Sévigné (FR)**
• **DANIEAU, Fabien**
**35576 Cesson-Sévigné (FR)**

(74) Representative: **Huchet, Anne et al**
**InterDigital CE Patent Holdings**
**20, rue Rouget de Lisle**
**92130 Issy-les-Moulineaux (FR)**

(54) **A VIRTUAL REALITY EXTERNAL EVENT PROCESSING METHOD, CORRESPONDING DEVICES AND COMPUTER PROGRAM**

(57) The disclosure relates to a method and device for processing event data, representative of a current event occurring in a real environment, the method being implemented by an electronic device connected to a device for restitution of a virtual environment, called a rendering device used by a user. According to the disclosure, the method comprises:
- obtaining at least one piece of data representative of said current event, called event data;
- obtaining a piece of data representative of a level of immersion of said user within the virtual environment, called an immersion level;
- determining an urgency level, as a function of said event data and the level of immersion;
- restituting, within the virtual environment, a notification of said external event according to the urgency level.

Figure 2

EP 3 493 026 A1

**Description**

**1. Technical field**

The disclosure relates to virtual reality event processing. More specifically, the disclosure relates to external event processing in a virtual reality context.

**2. Background**

In virtual reality, users are usually isolated from the environment and the reality around them. The stronger this cut, the greater the feeling of immersion is important. The corollary of this quality of virtual reality environment is that the user is totally disconnected from the actual reality. The user is absolutely unaware of the events that are actually going on , and may not be aware that someone is physically approaching, for example.

The main virtual reality headsets are HTC Vive®, Oculus Rift® and Playstation VR®. These devices require an external tracking device to be located in the space (respectively two invisible light emitters, one infrared camera and one RGB camera). These systems detect if the headset leaves the tracking space and warns the user, but are blind to other objects in that environment. Actually, the point of these tracking devices is to be sure than the user remains in a controlled area, around the virtual headset connection base (or computer

In patent application US20160124502, it is indicated that obstacles can nevertheless be (pre)defined in the tracking space of the virtual headset. However, this definition is done only during the calibration of the device and does not take into account new obstacles. In addition, obstacles in motion are not tracked. Thus, this proposed method only allows parametrizing the environment around the virtual headset before its use.

In patent US9111498, it is proposed to use a sensor detecting physical changes in the environment. These detections are then notified to the user. The problem with this approach is that the user will be interrupted as soon as an object is detected, whatever its nature. Thus, considering that the user often moves during the use of a virtual headset, the method proposed in US9111498 is difficult to implement.

Thus, the present disclosure has been devised with the foregoing in mind.

**3. Summary**

The disclosed technique can allow limiting the drawbacks of virtual reality immersion. Indeed, it is proposed a technique that allows informing the user of the external events which occur during the use of the virtual reality devices. The proposed technique can thus prevent painful consequences of using virtual reality devices and of being completely cut from the external environment. More softly, the proposed technique allows building a possible interaction between the virtual reality user and external user, evolving around the virtual reality user, in the real environment.

Thus, the disclosure relates to a method for processing event data, representative of a current event occurring in a real environment, the method being implemented by an electronic device connected to a device for restitution of a virtual environment, called a rendering device used by a user. The method comprises:

- obtaining at least one piece of data representative of said current event, called event data;
- obtaining a piece of data representative of a level of immersion of said user within the virtual environment, called an immersion level;
- determining an urgency level, as a function of said event data and the level of immersion;
- restituting, within the virtual environment, a notification of said external event according to the urgency level.

Thus, the proposed method allows preventing loss of interaction of the virtual reality user regarding the external events.

According to an embodiment, restituting, in the virtual environment, a notification of said external event according to the urgency level is implemented when a value of the urgency level exceeds a predetermined threshold.

Additionally, the proposed method allows mitigating the necessity of interrupting the user while using the virtual headset. Hence, the user is interrupted only if necessary and thus the proposed technique allows avoiding breaking his immersion. For example the user will possibly be interrupted if a person approaches but just be alerted if a pet enters the tracking space.

According to a specific feature, restituting the notification of said external event comprises a graphic rendering within the field of view of the user within the virtual environment.

Thus, the user is alerted of the external event with a graphical element in the virtual environment that is close of its field of view, thus allowing being sure that the user will see the notification.

According to an embodiment, the method further comprises transmitting, to an external user, a response to an event at least partially generated by said external user.

Thus, the external user is also alerted of the fact that the virtual environment user has been alerted of its presence.

According to a specific feature, obtaining a piece of data representative of a level of immersion of said user in the virtual environment comprises:

- obtaining at least one indicator relating to the use of said virtual environment by said user, called usage indicator;
- obtaining an emotional state of said user;
- determining said level of immersion according to said usage indicator and said emotional state of said user.

According to a specific feature, obtaining said at least one indicator of use comprises obtaining at least one indicator of use of a human-machine interface.

According to a specific feature, a usage indicator of a human-machine interface, denoted HMI, comprises calculating a $M_{UIU}$ value, such that: where

$$M_{UIU} = \frac{\sum_i \frac{\omega_i \times (NEDLSi * 10)}{NED10LS}_i}{NBD} \ \forall i \in [1, NBD]$$

- NBD corresponds to the number of devices of the HMI ;
- NEDLS corresponds to the number of events, for the HMI device i, during the last second;
- NED10LS corresponds to the total number of events of all the HMI devices during the last ten seconds.
- coefficient $\omega i$ is an adaptation factor related to the HMI device *i* for standardizing the HMI devices with respect to each other.

According to a specific feature, obtaining said emotional state of said user is implemented according to at least one of the following values:

- resistivity of contact of the skin,
- relative humidity of the skin,
- electrical variation of muscle tone,
- change in heart rate,
- blood pressure,
- oxygen saturation of the blood.

According to another aspect, the disclosure also relates to a device for processing event data, representative of a current event occurring in a real environment, the device being configured to be connected to a device for restitution of a virtual environment, called a rendering device to which a user is connected, the device comprising a processor and a memory, wherein said processor is configured for:

- obtaining at least one piece of data representative of said current event, called an event data;
- obtaining a piece of data representative of a level of immersion of said user within the virtual environment, called an immersion level;
- determining of an urgency level, as a function of said event data and the level of immersion;
- restituting, within the virtual environment, a notification of said external event according to the urgency level.

According to a specific feature, the processor is configured so that the restitution, in the virtual environment, of a notification of said external event according to the urgency level is implemented when a value of the urgency level exceeds a predetermined threshold.

According to a specific feature, the processor is configured so that the restitution of the representative notification of said external event comprises a graphic rendering near the field of view of the user within the virtual environment.

According to a specific feature, the processor is configured for transmitting, to an external user, a response to an event at least partially generated by said external user.

According to a specific feature, the processor is configured so that obtaining a piece of data representative of a level of immersion of said user in the virtual environment comprises:

- obtaining at least one indicator relating to the use of said virtual environment by said user, called usage indicator;
- obtaining an emotional state of said user;

- determining said level of immersion according to said usage indicator and said emotional state of said user.

The present disclosure is also related to a computer program product downloadable from a communication network and/or recorded on a medium readable by a computer and/or executable by a processor, comprising program code instructions for implementing the method as described above.

The present disclosure also concerns a non-transitory computer-readable medium comprising a computer program product recorded thereon and capable of being run by a processor, including program code instructions for implementing the method as described above.

Such a computer program may be stored on a computer readable storage medium. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

It is to be understood that both the foregoing general description and the following detailed description are exemplary and explanatory and are not restrictive of the disclosure, as claimed.

It must also be understood that references in the specification to "one embodiment" or "an embodiment", indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

## 4. Brief description of the drawings

Embodiments of the present disclosure can be better understood with reference to the following description and drawings, given by way of example and not limiting the scope of protection, and in which:

- Figure 1 illustrates an event processing method according to the present principles;
- Figure 2 illustrates an embodiment of an event processing device according to the disclosure;
- Figure 3 depicts a simplified representation of the architecture of a device according to the disclosure.

## 5. Description

5.1 General principle

The general principle of the disclosure consists in providing users of the virtual reality (in the process of viewing or interacting with the virtual content) to be informed of events and/or of elements in approach around him, thus allowing the user to react to these events, even during an immersive content. More specifically, it is described a method and corresponding device for providing, to the virtual reality equipment (e.g. virtual reality headset), means of informing (discreetly or not) of the entry, the exit and the presence of one or more elements in one or more volumes defined around the user. The information can be intended both for the user of the headset but also for people outside the virtual environment (in real life). The information which is given to the user of the virtual reality equipment is not identical that the one given to other people around. While the user of the virtual reality equipment (also called the virtual reality user) is informed of the occurrence of events (like phone calls, alarms, movements in the playing area, etc.), the external users are informed of the decision of either an automated event classification system or of a response of the user to their entry in the playing area.

The general principle of the proposed technique consists in mitigating the notification of the external event as a function of the immersion of the virtual reality user. To this end, the implication of the virtual reality user in constantly monitored so as to provide an immersion level which serves as a basis for deciding if and how the virtual reality user is informed of the event.

Unlike previous techniques which are focused on the external environment itself, the method of the disclosure is focused on the virtual reality user and on what he has to be informed of. Under this general principle, an embodiment is described in which the implication of the user depends on several parameters which are measured on the virtual reality devices themselves.

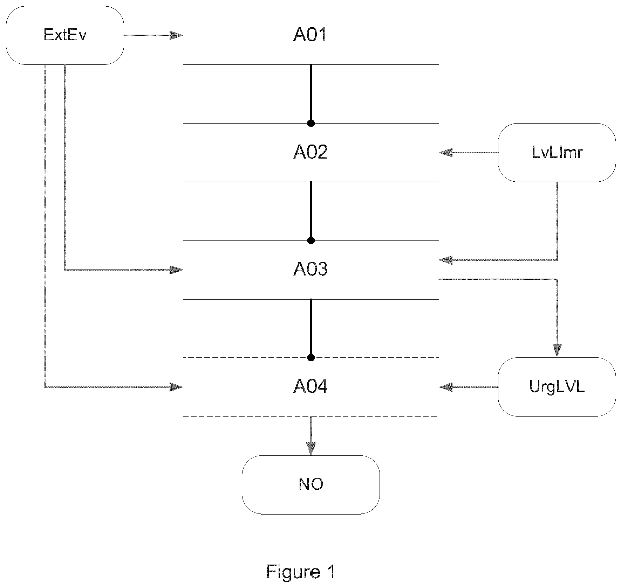

The general principle of the disclosure is described in relation with figure 1. Thus the disclosure relates to a method for processing event data, the method comprising:

- obtaining (A01) at least one piece of data representative of a current external event, called an event data (ExtEv);
- obtaining (A02) a piece of data representative of a level of immersion of said user within the virtual environment, called an immersion level (LvlImr);
- determining (A03) an urgency level (UrgLVL), as a function of said event data (ExtEv) and the level of immersion (LvlImr);
- optionally, the restitution (A04), within the virtual environment, of a notification (NO) of said external event (ExtEv) according to the urgency level (UrgLVL).
- Thus, the proposed method allows transmitting, within the virtual environment, information about the real environment by taking into account the priority of the event and the importance of this event regarding the activity of the virtual user in the virtual environment.

According to the disclosure, the restitution, in the virtual environment, of a notification of said external event according to the urgency level is implemented when a value of the urgency level exceeds a predetermined threshold.

Thus, if the detected event is not of a high priority, the virtual reality user will not be disturbed from the virtual reality environment.

Several additional characteristics of the proposed technique are described herein above according to a specific embodiment of the principle.

Technically, a set of presence or movement sensors with telemetry based on Infra-red technology, ultrasound, laser or others or a coupling of several technologies (in sufficient number to cover the 360° of the horizontal field around the user) can detect, in one or more defined ranges around the user, intrusion, output and incidentally the presence of various elements around these sensors. The precision of the measurement of the distance is not a primordial aspect (the fraction of meter is sufficient) since the object of the technique is not to precisely locate and identify the real environment, but to detect movement around the user. These sensors can be located on the virtual headset itself or on other devices in the headset area.

These sensors are used for analyzing the environment. By the combination of the use of these different types of sensors, the system is able to detect whether the element that enters the controlled area, parks there or comes out is a radiating element in the thermal infrared; this allows the user, for example, to know if it is a living being who enters, stays or leaves the volume considered. Another solution is to equip the HMD helmet with a catadioptric camera to monitor the environment at 360°. By image analysis it is thus possible to detect if there is an object in motion and if this object is a person (with face detection for example).

The position and the orientation of the helmet being known, the element detected in the helmet reference can easily be positioned in the user's virtual environment by a matrix calculation.

According to the disclosure, the system can also be provided with a mechanism for classifying the detected elements. For example, people detected can be personally identified. This allows the user to customize notifications according to these individuals. Face analysis approaches based on "feature" analysis or deep learning allow such discrimination. If the proposed mechanism is activated at the virtual reality rendering level and in the case of a positive detection, the virtual reality system will propose to the user information to indicate this detection to him: the virtual reality user is then able take the information into account or not or to interpret the information if necessary. This information may for example be a graphical gauge always present at the top of the user's field of vision, invisible below a certain threshold (invisible <10%, visible from 10% to 100% for example) and whose value is globally inversely proportional to the distance of the element to the user allowing the user to be warned without violence. The value proposed in the display may be the shortest distance detected by all the sensors. The graphic rendering step of the notification for the virtual user depends on several parameters, linked to the virtual headset.

The sensor control system, their calibration, taking into account the returned values, the calculation of the display decision or haptic feedback to the user, etc. is supported by the same computer system that performs virtual reality restitution of the streams (movies, games, etc.).

The information can be displayed to the person outside the virtual reality system (via an LED system on the headset for example). Depending on the content that the user "consumes", the external person may be informed that the user should not be disturbed (during a key stage of a game or highlight of a movie for example). As before, the information can be modulated according to the identification of the person.

The activity of the user can be determined by an analysis of bio-signals from sensors (placed on the human/machine interface devices (like joysticks for example). Analysis of heart rate or skin conductance (GSR) delivers good indicators of the state of engagement of the user.

This analysis can also comprise a part focused on the audiovisual content: analysis of images (a lot of movement for example) or analysis of the sound (a sustained rhythm of a soundtrack is often indicative of a strong time occurring in the movie).

5.2 Description of an embodiment

5.2.1 Presentation

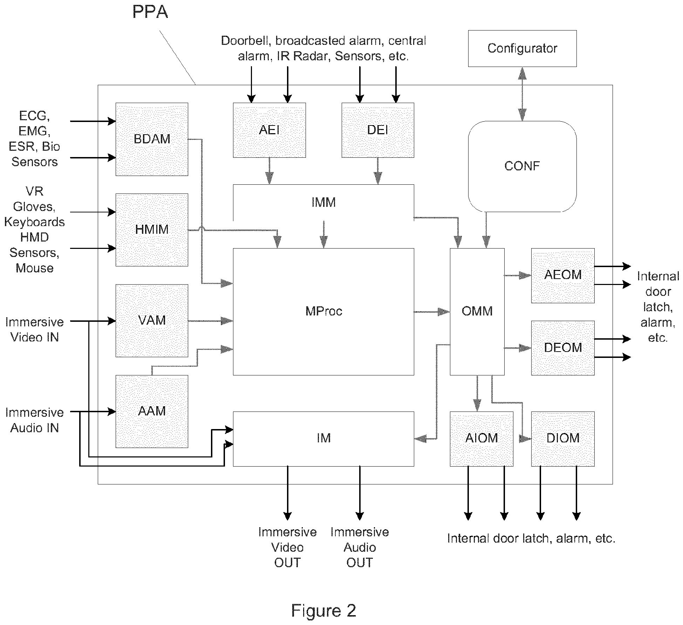

According to a specific embodiment, described in figure 2, an apparatus (PPA) is described in which a processor defines, in a continuous way, an urgency level, this urgency level being used for mitigating the restitution of an external event along with one virtual reality content in a virtual reality headset.

For achieving this result, this apparatus thus have several input modules, which are in charge of obtaining immersive data from the content which is processed for the virtual reality headset and from the usage of human/machine interfaces devices by the user. The apparatus thus have an audio analyzer module (AAM), a video analyzer module (VAM), a Human/Machine device usage analyzing module (HMIM). For evaluating the emotional state of the user in the virtual reality content, the apparatus also comprises a biological data analyzing module (BDAM). Each preceding module is in charge of defining, for a given period or range, a composite score (value). These scores are fed to the main processor (MProc) for obtaining (calculating) an immersive level of the user. This immersive level can be obtained by mixing three main scores (values): the Human/Computer interface usage, the audio/video dynamic level, the emotional state. Took together, these three scores give the immersive level of the user.

The device also comprises an input manager module (IMM) which evaluates the occurrence of external events and delivers an external event characterization, which may be view as composite data formed by an identifier of the event, a level of importance (priority) and optionally a message. For achieving these results, the input manager module is connected to an analogic external interface (AEI) and a digital external interface (DEI) which allow receiving the various inputs from the external analogic or digital sensors.

The urgency level is fed to the output manager module (OMM) which has the ability to both creates specific outputs for external users (i.e. display messages for example or play sounds) thru an analogic external output module (AEOM) and a digital external output module (DEOM). The output manager module (OMM) also has the ability to decide to update the content (audio and/or video) for inserting, in the content, the optional information event (a notification) for the virtual reality user. This insertion, in the content, of the information for the virtual user, depends on a configuration file (CONF) accessible by the output manager module (OMM).

The configuration file comprises (CONF) configuration parameters which have previously been fixed by the virtual reality user in order to define for example specific priorities in the events and/or person to whom the virtual reality user accept to answer/receive information. The configuration file (CONF) can also comprises specificity of the user like for example a phone number, identification data, social media accounts so as to allow the communication of external events coming from these source to possibly be reported to the virtual reality user during its virtual reality experience.

The decision to insert a message or information for the virtual reality user is fed to an incrustation module (IM). The incrustation module uses the message or information fed by the output manager module (OMM) for updating the video and/or audio of the virtual reality content.

Finally, the output manager module (OMM) is connected to an analogic internal output module (AIOM) and a digital internal output module (DIOM) so as to provide events to these modules. For example, in case of a fire alarm, which is a very important external event, the digital internal output can consist in interrupting the connection of the virtual reality headset, allowing the virtual reality user to care about the external event (the fire alarm).

5.2.2 Calculation of the indicators

Several indicators are obtained by the apparatus in order to determine the level of immersion of the user in the virtual reality content.

The *dynamics of use* of the HMI (Human/Machine Interface) is the composite indicator, taking into account the sliding mean value, over the last 10 seconds, of at least one of the following parameters:

- number of actions on the remote control, joystick, VR glove, etc.
- use of the microphone.

The *sound dynamics* is the composite indicator taking into account the sliding mean value, over the last 10 seconds, of at least one of the following parameters:

- width of the bandwidth used;
- average energy value;

- rhythm breaks, by analyzing the 'Beat' values;
- preponderance of low frequencies compared to the whole sound signal.

The image dynamics is the composite indicator taking into account the sliding mean value, over the last 10 seconds or the last 10 image captures taken at 1 second intervals of at least one of the following parameters:

- variation of the average luminance,
- variation of the average contrast,
- rhythm of rupture of the content of the images.

The *emotional state* of the user is the composite indicator taking into account the sliding mean value over the last 10 seconds of at least one of the following parameters:

- values of resistivity of skin contact,
- values of the relative humidity of the skin,
- values of the electrical variation of muscle tone,
- change in heart rate, blood pressure and blood oxygen saturation.

These indicators are for example obtained by the corresponding modules of the devices and fed to the main calculator which is able to mix them in order to obtain the previous three main scores (HMI usage, Audio/Video Dynamics, Emotional State). Given these three main scores, the immersion level of the virtual reality user is obtained. According to this embodiment, the three main scores are binary scores. This means that a main score has only two values: low or high (0 or 1, false or true). Applying a ponderation values on each of this three main score allows obtaining the immersion level of the user). The ponderation value may be arbitrary fixed by the system or parametrized by the virtual reality user himself (as a function of the virtual reality content e.g. game, movie, etc.).

In another embodiment, a table may be used to obtain the immersion level in view of the values of the three main scores, such like the following:

| HMI Use | Audi/Video Dynamics | Emotional State | Immersion Level |
|---|---|---|---|
| 1 | 1 | 1 | 100 |
| 0 | 1 | 1 | 80 |
| 0 | 0 | 1 | 70 |
| 0 | 0 | 0 | 20 |
| 1 | 0 | 0 | 10 |
| 1 | 1 | 0 | 20 |
| 1 | 0 | 1 | 30 |
| 0 | 1 | 0 | 5 |

The immersion level is then used to determine, in accordance to the incoming external events, the level of urgency (which is described, according to a specific embodiment herein after).

An example of the calculation of the dynamic use of HMI (indicator denoted $M_{UIU}$) is :

$$M_{UIU} = \frac{\sum_i \frac{\omega_i \times (NEDLS_i * 10)}{NED10LS}_i}{NBD} \ \forall i \in [1, NBD]$$

where

- NBD corresponds to the number of devices of the HMI ;
- NEDLS corresponds to the number of events (keystrokes, mouse strokes, joystick strokes, etc.), for the HMI device i, during the last second ;
- NED10LS corresponds to the total number of events of all the HMI devices during the last ten seconds.

- the coefficient $\omega_i$ is an adaptation factor related to the HMI device $i$ and allows standardizing the HMI devices with respect to each other, the higher the value is the more the equipment is significant for the time interval considered.

In this embodiment, the mean value is calculated according to the past ten seconds of activity. The value of ten seconds is purely illustrative and the mean value can be obtained for a longer or shorter period, mainly based on the availability of the processing resources.

According to a specific embodiment, the following adaptation factors are used for the various HMI devices:

| Device | $\omega_i$ |
|---|---|
| *Keyboard* | 1 |
| VR Gloves | 2 |
| Mouse | 0.25 |
| HMD | 5 |

The main score, related to the HMI Usage for the period of the last second, will be:

- 'High' (1) if the sliding mean value is greater than 1;
- 'Low' (0) if this value is less than 1.

5.2.3 Determining the external events.

For determining the external events that may or not be notified to the virtual reality user, one has first to recognize an event and then to classify it. It is not an object of the disclosure to provide solutions for recognizing the people in the virtual reality area or to provide solution for detecting moving people and/or changes in the external environment around the virtual headset and playing area. For obtaining these input external events, several known techniques may be used, in combination. For the purpose of the disclosure, it will be supposed that the event is recognized and that it is possible to associate an "internal" description of this event for the system. Among the plurality of events that may be detected, here are several examples of some characteristic ones:

- detection of an alarm (from a central monitoring system, a fire alarm, an alarm broadcast by radio, etc.); as a first step, the weight of this criterion has priority and must be maximized (it is even possible that this event is a case of exception and must be managed out of the calculation formula);
- detection of a doorbell / knocking on the door; because of the physical displacement of the person generating this event, it is considered as important and may be notified to the user;
- detection of a phone call; due to the non-physical displacement of the person generating this event, it may be considered as less important than a bell at the door of the dwelling; the weight of this event is fixed but can be variable for example higher if the calling number is part of a preferential list and average in the general case;
- detection of movement in the area (this may be a movement of a person or of a pet) : this will not be considered as having the same importance;
- detection of an external notification of a social network (parameters of the social network have been populated in the configuration file) or reception of a message (SMS, MMS);

These events are sorted according to their type. Each type has a level of importance (priority, defined by a weight), which is configured by default. Some types may be reconfigured by the virtual environment user and some may not (like the priority/weight of an alarm for example). According to the disclosure, the device comprises a classifier which is able to classify the external event and give it a type (a priority).

5.2.4 Obtaining the level of urgency

As already said, the level of urgency if obtained by the combination of the immersion level and of the normalized event (as a function of its priority).

More specifically, according to an embodiment, the following procedure is applied for determining the level of urgency. As a preliminary processing, both the level of immersion and the event and normalized on a percentage basis. The immersion level and the event are thus gradated from 0 to 100%. The determination of the level of urgency is then determined by the following process:

for an event comprised between 0 and 50 %:

- when the level of immersion is comprised between 0% and 50 %: the level of urgency is 0;
- when the level of immersion is comprised between 50% and 100 %: the level of urgency is 0;

for an event comprised between 50% and 80 %:

- the level of urgency is determined by a function $f(x)$, and more specifically in this embodiment an affine function, $f(x) = ax + b$ in which $a$ = 10/3 and $b$ = -500/3.
- where, when the immersion level is situated above the result of this function, the level of urgency is 2 and when the immersion level is situated below the result of this function,

the level of urgency is 3
for an event comprised between 80% and 100 %, the level of urgency of not linked to the immersion level, and is always 4.

Of course, this is an example of parametrization of the level of urgency. Other parameters can be applied as a function of decisions which are made by the user himself (for example the percentages of decisions can be modulated by the user himself so as the function and its parameters.

5.2.5 Processing the level of urgency

According to this embodiment, the level of urgency of the event relatively to the immersion of the virtual user is noted from 0 to 4. This level is use to determine whether to notify the virtual reality user of and to determine an automatic possible answer (notification) to the people outside to the immersive system in accordance with the following table.

| level of urgency | Virtual user notification | External notification |
|---|---|---|
| 0 | No | No |
| 1 | No (later notification will be done) | Waiting |
| 2 | Yes | Waiting |
| 3 | Yes | Yes |
| 4 | Yes + Additional Alarm | N/A |

In this embodiment, it must be considered that the calculation of the level of urgency is carried out continuously and is particularly sensitive to the level of immersion of the user, this allowing for example to have at time t an event judged level 0 while the same event a few moments later will judged to be a level 2 event.
In this embodiment, this level 2 is the only one for which the degree of immersion of the user is decisive in order to decide whether the user notification is done immediately or not. Thus, in this embodiment, the predetermined threshold from which the notification is possibly done to the user is 2.

5.3 Apparatuses

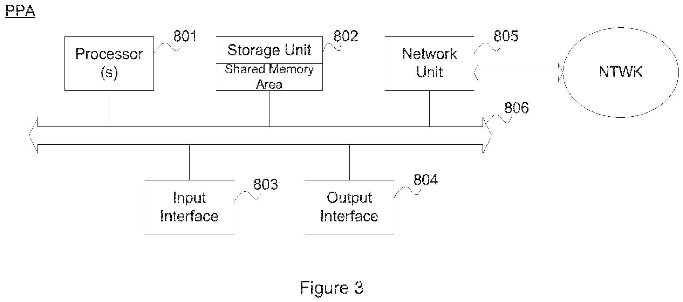

Figure 3 is a schematic block diagram illustrating an example of a device for processing event data, according to an embodiment of the present disclosure. Such a device may be any device in which the processing of packets acquired by the device has to be managed in a service chaining condition: a computer, a game apparatus, a set-top box, a TV set or any portable handheld device such as a smartphone, a tablet for example.
An apparatus PPA illustrated in figure 3 includes a processor 301, a storage unit 302 (comprising a shared memory unit for example), an input interface 303, an output interface 304, and optionally a network unit 305 which are connected by a bus 306. Of course, constituent elements of the computer apparatus PPA may be connected by a connection other than a bus connection using the bus 306.
The processor 301 controls operations of the apparatus PPA. The storage unit 302 stores at least one program to be executed by the processor 301, and various data, including for example metadata, set of characteristics or processing rules, parameters used by computations performed by the processor 301, intermediate data of computations performed by the processor 301, and so on. The processor 301 is formed by any known and suitable hardware, or software, or a combination of hardware and software. For example, the processor 301 is formed by dedicated hardware such as a processing circuit, or by a programmable processing unit such as a CPU (Central Processing Unit) that executes a program stored in a memory thereof.

The storage unit 302 is formed by any suitable storage or means capable of storing the program, data, or the like in a computer-readable manner. Examples of the storage unit 302 include non-transitory computer-readable storage media such as semiconductor memory devices, and magnetic, optical, or magneto-optical recording media loaded into a read and write unit. The program causes the processor 301 to process events, delivering notifications to a virtual headset, from at least one event obtained via the input interface (analogic, digital), according to an embodiment of the present disclosure as described previously. More particularly, the program causes the processor 302 to determine the immersion level of the virtual environment user and to process the external events according to their level of importance for providing a level of urgency. The processing parameters or rules may be stored into storage unit 302.

The input interface 303 is formed for example by a set of input devices and/or sub-interfaces (audio/video) or is formed by a part of the shared memory comprised in the storage unit 302.

The output interface 304 is formed for example by a set of input devices and/or sub-interfaces (audio/video) or is formed by a part of the shared memory comprised in the storage unit 302.

The network unit 305 provides interfaces between the apparatus PPA and external apparatus. The network unit 305 may be a dedicated device or module for managing the process of data.

Although only one processor 301 is shown on figure 3, it must be understood that such a processor may comprise different modules (cores) and units embodying the functions carried out by apparatus PPA according to embodiments of the present disclosure.

These modules and units may also be embodied in several processors 301 communicating and co-operating with each other.

**Claims**

1. A method for processing event data, representative of a current event occurring in a real environment, the method being implemented by an electronic device connected to a device for restitution of a virtual environment, called a rendering device used by a user, the method being **characterized in that** it comprises:

   - obtaining (A01) at least one piece of data representative of said current event, called event data (ExtEv);
   - obtaining (A02) a piece of data representative of a level of immersion of said user within the virtual environment, called an immersion level (LvlImr);
   - determining (A03) an urgency level (UrgLVL), as a function of said event data (ExtEv) and the level of immersion (LvlImr);
   - restituting (A04), within the virtual environment, a notification (NO) of said external event according to the urgency level (UrgLVL).

2. The method according to claim 1, **characterized in that** restituting (A04), in the virtual environment, a notification (NO) of said external event according to the urgency level (UrgLVL) is implemented when a value of the urgency level (UrgLVL) exceeds a predetermined threshold.

3. The method according to claim 1, **characterized in that** restituting (A04) the notification of said external event comprises a graphic rendering within the field of view of the user within the virtual environment.

4. The method of claim 1, **characterized in that** it further comprises transmitting, to an external user, a response to an event at least partially generated by said external user.

5. The method according to claim 1, **characterized in that** obtaining a piece of data representative of a level of immersion of said user in the virtual environment comprises:

   - obtaining at least one indicator relating to the use of said virtual environment by said user, called usage indicator;
   - obtaining an emotional state of said user;
   - determining said level of immersion according to said usage indicator and said emotional state of said user.

6. The method according to claim 5, **characterized in that** obtaining said at least one indicator of use comprises obtaining at least one indicator of use of a human-machine interface.

7. The method of claim 6, **characterized in that** a usage indicator of a human-machine interface, denoted HMI, comprises calculating a $M_{UIU}$ value, such that:

$$M_{UIU} = \frac{\sum_i \frac{\omega_i \times (NEDLS_i * 10)}{NED10LS}_i}{NBD} \; \forall i \in [1, NBD]$$

where

- NBD corresponds to the number of devices of the HMI;
- NEDLS corresponds to the number of events, for the HMI device i, during the last second;
- NED10LS corresponds to the total number of events of all the HMI devices during the last ten seconds;
- coefficient $\omega_i$ is an adaptation factor related to the HMI device $i$ for standardizing the HMI devices with respect to each other.

8. The method according to claim 5, **characterized in that** obtaining said emotional state of said user is implemented according to at least one of the following values:

- resistivity of contact of the skin,
- relative humidity of the skin,
- electrical variation of muscle tone,
- change in heart rate,
- blood pressure,
- oxygen saturation of the blood.

9. A device for processing event data, representative of a current event occurring in a real environment, the device being configured to be connected to a device for restitution of a virtual environment, called a rendering device used by a user, the device comprising a processor and a memory, wherein said processor is configured for:

- obtaining at least one piece of data representative of said current event, called an event data;
- obtaining a piece of data representative of a level of immersion of said user within the virtual environment, called an immersion level;
- determining of an urgency level, as a function of said event data and the level of immersion;
- restituting, within the virtual environment, a notification of said external event according to the urgency level.

10. The device (PPA) according to claim 9, **characterized in that** the processor is configured so that restituting, in the virtual environment, a notification of said external event according to the urgency level is implemented when a value of the urgency level exceeds a predetermined threshold.

11. The device (PPA) according to claim 9, **characterized in that** the processor is configured so that restituting the notification of said external event comprises a graphic rendering within the field of view of the user within the virtual environment.

12. The device (PPA) according to claim 9, **characterized in that** the processor is configured for transmitting, to an external user, a response to an event at least partially generated by said external user.

13. The device (PPA) according to claim 9, **characterized in that** the processor is configured so that obtaining a piece of data representative of a level of immersion of said user in the virtual environment comprises:

- obtaining at least one indicator relating to the use of said virtual environment by said user, called usage indicator;
- obtaining an emotional state of said user;
- determining said level of immersion according to said usage indicator and said emotional state of said user.

14. The device (PPA) according to claim 13, **characterized in that** the processor is configured so that obtaining said at least one indicator of use comprises obtaining at least one indicator of use of a human-machine interface.

15. A computer program product comprising computer executable program code recorded on a computer readable non-transitory storage medium, the computer executable program code when executed, performing any method according to claims 1 to 8.

Figure 1

PPA

Doorbell, broadcasted alarm, central
alarm, IR Radar, Sensors, etc.

Configurator

ECG,
EMG,
ESR, Bio
Sensors

BDAM

AEI

DEI

CONF

VR
Gloves,
Keyboards
HMD
Sensors,
Mouse

HMIM

IMM

AEOM

Internal
door
latch,
alarm,
etc.

Immersive
Video IN

VAM

MProc

OMM

DEOM

Immersive
Audio IN

AAM

IM

AIOM

DIOM

Immersive
Video
OUT

Immersive
Audio
OUT

Internal door latch, alarm, etc.

Figure 2

PPA

Figure 3

Europäisches
Patentamt

European
Patent Office

Office européen
des brevets

**EUROPEAN SEARCH REPORT**

Application Number

EP 17 30 6653

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/336640 A1 (IMOTO MAKI [JP] ET AL) 23 November 2017 (2017-11-23)<br>* paragraph [0003] *<br>* paragraph [0006] *<br>* paragraph [0008] - paragraph [0009] *<br>* paragraph [0061] - paragraph [0063] *<br>* paragraph [0065] - paragraph [0066] *<br>* paragraph [0068] - paragraph [0070] *<br>* paragraph [0077] - paragraph [0078] *<br>* paragraph [0080] *<br>* paragraph [0097] *<br>* paragraph [0099] - paragraph [0102] *<br>* paragraph [0104] *<br>* paragraph [0109] - paragraph [0110] *<br>* paragraph [0112] *<br>* paragraph [0120] *<br>* paragraph [0122] *<br>* paragraph [0127] *<br>* paragraph [0139] - paragraph [0143] *<br>* paragraph [0145] *<br>* paragraph [0154] *<br>* paragraph [0159] *<br>* paragraph [0161] - paragraph [0162] *<br>* figure 7 *<br>* paragraph [0090] *<br>----- | 1-15 | INV.<br>G06F3/01 |
| X | US 2016/282618 A1 (KON TAKAYASU [JP] ET AL) 29 September 2016 (2016-09-29)<br>* paragraph [0043] - paragraph [0044] *<br>* paragraph [0097] - paragraph [0098] *<br>* paragraph [0105] - paragraph [0110] *<br>* paragraph [0118] *<br>* figures 6, 7 *<br>----- | 1,9,15 | TECHNICAL FIELDS SEARCHED (IPC)<br><br>G06F |

-/--

The present search report has been drawn up for all claims

| Place of search | Date of completion of the search | Examiner |
|---|---|---|
| Munich | 7 May 2018 | Bedarida, Alessandro |

EPO FORM 1503 03.82 (P04C01)

page 1 of 2

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2017/337897 A1 (JUNG HEONJAE [KR] ET AL) 23 November 2017 (2017-11-23)<br>* abstract *<br>* figures 6, 7D *<br>* paragraph [0008] *<br>* paragraph [0059] *<br>* paragraph [0090] *<br>* paragraph [0094] - paragraph [0099] *<br>* paragraph [0108] *<br>* paragraph [0110] *<br>* paragraph [0113] *<br>* paragraph [0119] *<br>* paragraph [0121] *<br>* paragraph [0141] *<br>* paragraph [0149] - paragraph [0150] *<br>----- | 1,9,15 | |
| Y | US 2014/232534 A1 (BIRNBAUM DAVID [US] ET AL) 21 August 2014 (2014-08-21)<br>* abstract *<br>* paragraph [0002] - paragraph [0003] *<br>* paragraph [0008] - paragraph [0009] *<br>----- | 1,9,15 | TECHNICAL FIELDS SEARCHED (IPC) |

The present search report has been drawn up for all claims

| Place of search | Date of completion of the search | Examiner |
|---|---|---|
| Munich | 7 May 2018 | Bedarida, Alessandro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 30 6653

This annex lists the patent family members relating to the patent documents cited in the above-mentioned European search report.
The members are as contained in the European Patent Office EDP file on
The European Patent Office is in no way liable for these particulars which are merely given for the purpose of information.

07-05-2018

| Patent document cited in search report | | Publication date | Patent family member(s) | | | Publication date |
|---|---|---|---|---|---|---|
| US 2017336640 | A1 | 23-11-2017 | CN | 105051653 | A | 11-11-2015 |
| | | | EP | 2981070 | A1 | 03-02-2016 |
| | | | JP | WO2014156388 | A1 | 16-02-2017 |
| | | | US | 2016018655 | A1 | 21-01-2016 |
| | | | US | 2017336640 | A1 | 23-11-2017 |
| | | | WO | 2014156388 | A1 | 02-10-2014 |
| US 2016282618 | A1 | 29-09-2016 | CN | 105474302 | A | 06-04-2016 |
| | | | EP | 3030954 | A1 | 15-06-2016 |
| | | | JP | 6079614 | B2 | 15-02-2017 |
| | | | JP | 2015118332 | A | 25-06-2015 |
| | | | US | 2016282618 | A1 | 29-09-2016 |
| | | | WO | 2015092968 | A1 | 25-06-2015 |
| US 2017337897 | A1 | 23-11-2017 | EP | 3246788 | A1 | 22-11-2017 |
| | | | KR | 20170129509 | A | 27-11-2017 |
| | | | US | 2017337897 | A1 | 23-11-2017 |
| US 2014232534 | A1 | 21-08-2014 | CN | 104007818 | A | 27-08-2014 |
| | | | EP | 2770404 | A2 | 27-08-2014 |
| | | | JP | 2014164754 | A | 08-09-2014 |
| | | | KR | 20140104913 | A | 29-08-2014 |
| | | | US | 2014232534 | A1 | 21-08-2014 |

EPO FORM P0459

For more details about this annex : see Official Journal of the European Patent Office, No. 12/82

**EP 3 493 026 A1**